(19) Europäisches Patentamt / European Patent Office / Office européen des brevets

(11) **EP 2 416 995 B1**

(12) **EUROPÄISCHE PATENTSCHRIFT**

(45) Veröffentlichungstag und Bekanntmachung des Hinweises auf die Patenterteilung:
**14.12.2016 Patentblatt 2016/50**

(21) Anmeldenummer: **10702713.8**

(22) Anmeldetag: **09.02.2010**

(51) Int Cl.:
*B60T 13/66* (2006.01)      *B60T 13/74* (2006.01)
*B60T 8/44* (2006.01)

(86) Internationale Anmeldenummer:
**PCT/EP2010/051559**

(87) Internationale Veröffentlichungsnummer:
**WO 2010/115646 (14.10.2010 Gazette 2010/41)**

(54) **STEUERVORRICHTUNGEN FÜR EIN BREMSKRAFTVERSTÄRKTES BREMSSYSTEM EINES FAHRZEUGS UND VERFAHREN ZUM BETREIBEN EINES BREMSKRAFTVERSTÄRKTEN BREMSSYSTEMS EINES FAHRZEUGS**

CONTROL DEVICE AND METHOD FOR A VEHICLE BRAKE SYSTEM COMPRISING A BRAKE BOOSTER

DISPOSITIF ET PROCÉDÉ DE RÉGLAGE D'UN SYSTÈME DE FREINAGE D'UN VÉHICULE COMPRENANT UN SERVOFREIN

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.04.2009 DE 102009002315**

(43) Veröffentlichungstag der Anmeldung:
**15.02.2012 Patentblatt 2012/07**

(73) Patentinhaber: **Robert Bosch GmbH**
**70442 Stuttgart (DE)**

(72) Erfinder:
• **VOLLERT, Herbert**
  **71665 Vaihingen/Enz (DE)**
• **GARNIER, Remy**
  **71686 Remseck (DE)**
• **WEIBERLE, Reinhard**
  **71665 Vaihingen/Enz (DE)**
• **JAHNZ, Timo**
  **74354 Besigheim (DE)**
• **MEHL, Volker**
  **76356 Weingarten (DE)**
• **KNEIP, Frank**
  **74360 Ilsfeld (DE)**
• **MAHNKOPF, Dirk**
  **71634 Eglosheim (DE)**
• **KOLARSKY, Jens**
  **74321 Bietigheim/Bissingen (DE)**
• **HOENLE, Stephan**
  **70825 Korntal-Muenchingen (DE)**

(56) Entgegenhaltungen:
DE-A1- 10 057 557      DE-A1- 10 327 553
DE-A1-102005 024 577   DE-C1- 19 858 649
DE-T5-112006 002 550   US-A1- 2008 238 189

EP 2 416 995 B1

**Beschreibung**

Die Erfindung betrifft Steuervorrichtungen für ein bremskraftverstärktes Bremssystem eines Fahrzeugs. Des Weiteren betrifft die Erfindung ein Verfahren zum Betreiben eines bremskraftverstärkten Bremssystems eines Fahrzeugs.

Stand der Technik

Um einem Fahrer eines Fahrzeugs ein komfortables Betätigen eines Betätigungselements eines Bremssystems, wie beispielweise eines Bremspedals, zu ermöglichen, weist ein Bremssystem häufig einen Bremskraftverstärker auf. Das Bremssystem mit einem Bremskraftverstärker wird oft als bremskraftverstärktes Bremssystem bezeichnet.
Ein Bremskraftverstärker ist dazu ausgelegt, eine Unterstützungskraft bereitzustellen, welche zusätzlich zu einer von dem Fahrer auf das Betätigungselement ausgeübten Fahrerbremskraft das Abbremsen mindestens eines Rads bewirkt. Geeignete Bremskraftverstärker sind beispielsweise in der DE 10 2005 024 577 A1, der DE 10057 557 A1 und in der DE 103 27 553 A1 beschrieben.
Allerdings kann bei einem herkömmlichen bremskraftverstärkten Bremssystem ein Funktionsausfall oder eine Funktionsbeeinträchtigung des Bremskraftverstärkers oder einer mit dem Bremskraftverstärker zusammenwirkenden Komponente auftreten. In diesem Fall ist der Bremskraftverstärker in der Regel nicht mehr zum Bereitstellen einer ausreichend hohen Unterstützungskraft geeignet. Der Fahrer muss deshalb in einer derartigen Situation eine größere Fahrerbremskraft auf das Betätigungselement des bremskraftverstärkten Bremssystems ausüben. Insbesondere kann es dabei vorkommen, dass der Fahrer die eingeschränkte oder ausgefallene Funktionsfähigkeit des Bremskraftverstärkers erst relativ spät bemerkt und deshalb sehr plötzlich reagieren muss. Es ist deshalb wünschenswert, ein bremskraftverstärktes Bremssystem so auszubilden, dass auch bei einer eingeschränkten oder ausgefallenen Funktionsfähigkeit des Bremskraftverstärkers oder einer mit dem Bremskraftverstärker zusammenwirkenden Komponente ein guter Fahrkomfort für den Fahrer gewährleistet ist.

Offenbarung der Erfindung

Die Erfindung schafft eine Steuervorrichtung für ein bremskraftverstärktes Bremssystem eines Fahrzeugs mit den Merkmalen des Anspruchs 1, ein Bremskraftverstärktes Bremssystem mit den Merkmalen des Anspruchs 8, ein Fahrzeug mit den Merkmalen des Anspruchs 9 und ein Verfahren zum Betreiben eines bremskraftverstärktes Bremssystems eines Fahrzeugs mit den Merkmalen des Anspruchs 10.
Die vorliegende Erfindung ist mit einem kostengünstigen Bremssystem mit einem einfachen Aufbau anwendbar. Vor allem eignet sich die Erfindung zum Ausführen an einem Bremssystem mit einer mechanischen Kopplung zwischen dem Betätigungselement, beispielsweise einem Bremspedal, und zwischen dem Hauptbremszylinder. Durch die mechanische Kopplung sind eine verbesserte Sicherheit und ein geringeres Ausfallrisiko des Bremssystems gewährleistet.
Insbesondere ist keine zusätzliche Hardware zum Ausführen der erfindungsgemäßen Verfahren oder zum Einsetzen der entsprechenden Steuervorrichtungen nötig. Vorzugsweise wird zum Bestimmen der zweiten Information bezüglich der Gesamtbremskraft auf eine bereits am Fahrzeug vorhandene Komponente zurückgegriffen. Beispielsweise kann die zweite Information über einen Drucksensor eines Bremsregelungssystems, wie beispielsweise eines ABS-Systems oder eines ESP-Systems, ermittelt werden. Als erste Information kann mindestens eine die Funktionsweise des Bremskraftverstärkers beschreibende Größe verwendet werden, über welche der Bremskraftverstärker von einer Steuerung gesteuert wird. Die erste Information kann in diesem Fall direkt von der Steuerung an die Steuereinrichtung bereitgestellt werden. Auf diese Weise entfällt die Notwendigkeit eines Ermittelns der ersten Information.
In einer bevorzugten Ausführungsform kann auf eine Betätigungselement-Sensorik mit einem Kraftsensor zum direkten Messen der Fahrerbremskraft und/oder einem Wegsensor zum Messen eines der Fahrerbremskraft entsprechenden Verstellwegs einer verstellbaren Komponente des Betätigungselements verzichtet werden. Somit entfallen die mit dem Ausfallen der Betätigungselement-Sensorik verbunden Funktions-, Verzögerungs- und/oder Komforteinbußen. Insbesondere ermöglicht der Verzicht auf die Betätigungselement-Sensorik eine kostengünstigere Ausbildung des Bremssystems und eine Bauraumeinsparung an dem Betätigungselement.
Ebenso kann ein Funktionsausfall der Betätigungselement-Sensorik über die vorliegende Erfindung überbrückt werden, ohne dass dies für den Fahrer mit einer Funktionseinbuße, einer Verzögerungseinbuße und/oder einer Komforteinbuße verbunden wäre.
Des Weiteren realisiert die vorliegende Erfindung eine Möglichkeit zum Überbrücken einer Funktionsbeeinträchtigung des Bremskraftverstärkers durch Erhöhen des Gesamtbremsmoments um das zusätzliche Bremsmoment (Zusatz-Bremsmoment). Das zusätzliche Bremsmoment kann beispielsweise ein zusätzlicher Bremsdruck sein, um welchen der Gesamtbremsdruck erhöht wird. Das zusätzliche Bremsmoment kann als Ergänzung oder als Alternative dazu auch ein Bremsmoment eines ABS-Systems, eines ESP-Systems, eines elektrischen Stellers, eines elektromechanischen Stellers, einer elektrischen Parkbremse und/oder einer weiteren Bremskomponente sein. Durch das Bereitstellen des zusätzlichen Bremsmoments wird die Restfunktionalität des bremskraftverstärkten Bremssystems erhöht.

Unter einer Komponente des bremskraftverstärkten Bremssystems ist eine mit dem Bremssystem zusammenwirkende Fahrzeugkomponente zu verstehen. Die Komponente des bremskraftverstärkten Bremssystems kann jedoch auch eine Fahrzeugkomponente sein, welche nicht unmittelbar zum Abbremsen mindestens eines Rads beiträgt. Beispielsweise ist die mindestens eine Komponente des bremskraftverstärkten Bremssystems ein Bremskraftverstärker, ein Warn- und/oder Informationsausgabegerät, ein Fehlerspeicher, eine Sendeeinheit, ein Navigationsgerät, ein Fahrzeugradio, eine elektrische Parkbremse und/oder ein Bremsregelungssystem.

Vorteilhafte Weiterbildungen der erfindungsgemäßen Steuervorrichtungen sind in den Unteransprüchen beschrieben. Die Vorteile der erfindungsgemäßen Steuervorrichtungen sind auch bei einem bremskraftverstärkten Bremssystem mit einer erfindungsgemäßen Steuervorrichtung oder bei einem Fahrzeug mit einem derartigen bremskraftverstärkten Bremssystem gewährleistet.

Zusätzlich sind Weiterbildungen der erfindungsgemäßen Verfahren zum Betreiben eines bremskraftverstärkten Bremssystems eines Fahrzeugs entsprechend den Weiterbildungen der erfindungsgemäßen Steuervorrichtungen möglich.

Kurze Beschreibung der Zeichnungen

Weitere Merkmale und Vorteile der vorliegenden Erfindung werden nachfolgend anhand der Figuren erläutert. Es zeigen:

Fig. 1     eine schematische Darstellung einer ersten Ausführungsform der Steuervorrichtung;

Fig. 2     ein Koordinatensystem zum Darstellen einer zweiten Ausführungsform der Steuervorrichtung;

Fig. 3     ein Flussdiagramm zum Darstellen einer ersten Ausführungsform des Verfahrens;

Fig. 4     ein Flussdiagramm zum Darstellen einer zweiten Ausführungsform des Verfahrens; und

Fig. 5     eine schematische Darstellung einer dritten Ausführungsform der Steuervorrichtung.

Ausführungsformen der Erfindung

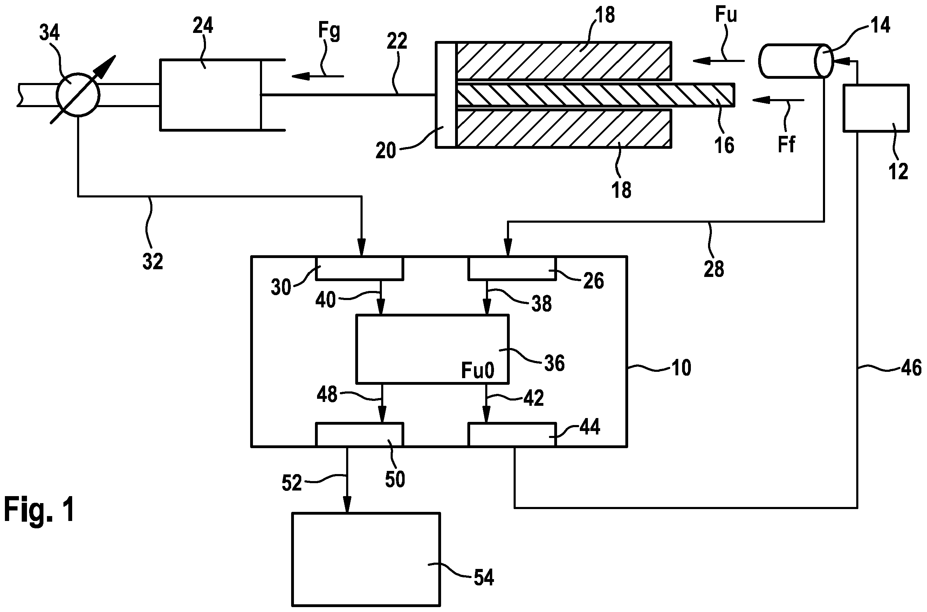

Fig. 1 zeigt eine schematische Darstellung einer ersten Ausführungsform der Steuervorrichtung.

Die schematisch wiedergegebene Steuervorrichtung 10 ist in einem Fahrzeug mit einem bremskraftverstärkten Bremssystem eingesetzt. Das (nur teilweise dargestellte) bremskraftverstärkte Bremssystem weist ein Betätigungselement 12, wie beispielsweise ein Bremspedal, auf. Über das Betätigungselement 12 kann ein Fahrer das Bremssystem zum Abbremsen mindestens eines Rads des Fahrzeugs mit der Steuervorrichtung 10 aktivieren. Dabei übt der Fahrer eine Fahrerbremskraft Ff auf das Betätigungselement 12 aus.

Um den Fahrer bei einem Abbremsen des Fahrzeugs arbeitsmäßig zu entlasten, ist das Bremssystem zusätzlich mit einem Bremskraftverstärker 14 ausgestattet. Der Bremskraftverstärker 14 ist dazu ausgelegt, eine (zusätzliche) Unterstützungskraft Fu zum Abbremsen des Fahrzeugs bereitzustellen. Der Bremskraftverstärker 14 kann beispielsweise ein elektromechanischer Bremskraftverstärker, ein elektrischer Bremskraftverstärker oder ein hydraulischer Bremskraftverstärker sein. Es wird darauf hingewiesen, dass die Anwendung der Steuervorrichtung 10 nicht auf einen bestimmten Typ des Bremskraftverstärkers 14 beschränkt ist, so dass andere Ausführungsbeispiele für den Bremskraftverstärker 14 ebenso verwendbar sind. Des Weiteren können auch mehrere Bremskraftverstärker 14 zum Bereitstellen der Unterstützungskraft Fu verwendet werden.

Das Betätigungselement 12 und der Bremskraftverstärker 14 sind in dem Bremssystem so angeordnet, dass die Fahrerbremskraft Ff und die Unterstützungskraft Fu als eine Gesamtbremskraft Fg zusammenwirken, wobei insbesondere gelten kann:

$$(Gl\ 1) \qquad F_g = F_f + F_u$$

Auch wenn nachfolgend von der Gleichung (Gl 1) ausgegangen wird, so ist für den Fachmann jedoch anhand der folgenden Absätze nahegelegt, dass das beschriebene Verfahren auch bei einer Gesamtbremskraft Fg, welche noch mindestens eine weitere Kraft umfasst, ausführbar ist.

Dazu können das Betätigungselement 12 und der Bremskraftverstärker 14 an ein gemeinsames Kopplungselement 20 gekoppelt sein, welches die Gesamtbremskraft Fg weiterleitet. Bei der dargestellten Ausführungsform sind das Betätigungselement 12 über einen Eingangskolben 16 und der Bremskraftverstärker 14 über einen Unterstützungskolben 18 an ein als Reaktionsscheibe ausgebildetes Kopplungselement 20 gekoppelt. Der Eingangskolben 16 und der Unterstützungskolben 18 sind eingangsseitig von dem Kopplungselement 20 angeordnet. In diesem Fall wirkt auf einen ausgangsseitig von dem Kopplungselement 20 angeordneten Ausgangskolben 22 die Gesamtbremskraft Fg. Die Gesamtbremskraft Fg wird somit ausgangsseitig von dem Betätigungselement 12 und dem Bremskraftverstärker 14 bereitgestellt.

Selbstverständlich ist eine Verwendung der Steuervorrichtung 10 auch mit einem bremskraftverstärkten Bremssystem ohne ein als Reaktionsscheibe ausgebildetes Kopplungselement 20 möglich. Wie für einen Fachmann durch die nachfolgende Beschreibung nahegelegt ist, kann die Steuervorrichtung 10 auch mit einem anderen Kopplungsmechanismus eingesetzt werden.

Die aus den Kräften Ff und Fu resultierende Gesamtbremskraft Fg wirkt vorzugsweise auf ein Kraft-Druck-Umwandlungselement derart, dass bei einer Gesamtbremskraft Fg ungleich Null in mindestens einem abgeschlossenen und mit einem Bremsmedium gefüllten Bremskreis eine Druckänderung erfolgt. Bei der dargestellten Ausführungsform wirkt der Ausgangskolben 22 mit der Gesamtbremskraft Fg auf eine verschiebbare Seite eines Hauptbremszylinders 24. Eine von dem Kopplungselement 20 weggerichtete Gesamtbremskraft Fg ungleich Null ist somit über den Hauptbremszylinder 24 in eine Erhöhung eines Drucks p im Inneren des Bremskreises umwandelbar. Für den Druck p im Inneren des Bremskreises gilt:

$$(Gl\ 2) \qquad p = Fg \backslash A,$$

wobei A einer Fläche des Hauptbremszylinders 24, oder eines anderen Kraft-Druck-Umwandlungselements, entspricht.

Die Erhöhung des Drucks p im Inneren des Bremskreises führt zu einem erhöhten Bremsdruck in mindestens einem (nicht skizzierten) Radbremszylinder, welcher an den Bremskreis angeschlossen ist. Auf diese Weise wird ein dem mindestens einen Radbremszylinder zugeordnetes Rad abgebremst.

Es wird hier darauf hingewiesen, dass eine Ausbildung des Bremssystems mit dem Hauptbremszylinder 24 oder als ein hydraulisches System mit einem abgeschlossenen Bremskreis, welcher mit einer Bremsflüssigkeit oder mit einem Bremsgas gefüllt ist, zur Verwendung der Steuervorrichtung 10 vorteilhaft, aber nicht notwendig ist.

Nachfolgend wird auf den Aufbau und die Funktionsweise der Steuervorrichtung 10 genauer eingegangen:

Die Steuervorrichtung 10 weist eine erste Eingabeeinrichtung 26 auf, welche dazu ausgelegt ist, eine bereitgestellte erste Information 28 bezüglich der Unterstützungskraft Fu zu empfangen. Die erste Information 28 kann beispielsweise die von einem (nicht skizzierten) Kraftsensor gemessene Unterstützungskraft Fu sein. Ebenso kann die erste Information 28 eine der Unterstützungskraft Fu entsprechende Größe zur Beschreibung einer Funktionsweise des Bremskraftverstärkers 14 sein. Die erste Information 28 umfasst bei einem elektromechanischen oder elektrischen Bremskraftverstärker 14 beispielsweise einen Motorstrom, ein Motormoment und/oder eine Motorposition eines (nicht dargestellten) Motors des Bremskraftverstärkers 14. Als Alternative oder als Ergänzung dazu kann die erste Information 28 auch eine Temperatur im Inneren des Bremskraftverstärkers 14 enthalten. Ist der Bremskraftverstärker 14 als hydraulischer Bremskraftverstärker ausgebildet, so kann die erste Information 28 einen Druckwert umfassen. Weitere Beispiele für eine der Unterstützungskraft Fu entsprechende Größe zur Beschreibung einer Funktionsweise des Bremskraftverstärkers 14 sind für den Fachmann naheliegend und werden deshalb nicht aufgezählt.

Eine zweite Eingabeeinrichtung 30 der Steuervorrichtung 10 ist dazu ausgelegt, eine bereitgestellte zweite Information 32 bezüglich der Gesamtbremskraft Fg zu empfangen. Vorzugsweise umfasst die zweite Information 32 einen Druck p, welcher von mindestens einem ausgangsseitig von dem Kraft-Druck-Umwandlungselement angeordneten Drucksensor 34 gemessen wird. Der mindestens eine Drucksensor 34 kann ein Vordrucksensor, ein Raddrucksensor und/oder ein Kreisdrucksensor sein. Beispielweise ist über den mindestens einen Drucksensor 34 der Druck p im Inneren des Hauptbremszylinders 24, im Inneren des Bremskreises und/oder vor dem Aggregat, ermittelbar. In einer bevorzugten Ausführungsform wird der mindestens eine Drucksensor 34 zusätzlich für ein ABS-System (Antiblockiersystem, Antilock Braking System) und/oder für ein ESP-System (Elektronisches Stabilitätsprogramm, Electronic Stability Control) verwendet. Durch die Multifunktionalität des mindestens einen Drucksensors 34 ist eine kostengünstige Ausführungsform der Steuervorrichtung 10 möglich. Selbstverständlich kann der mindestens eine Drucksensor 34 auch eine Untereinheit in einem Gehäuse der Steuervorrichtung 10 sein. Als Alternative oder als Ergänzung zu dem Druck p kann die zweite Information 32 auch die Gesamtbremskraft Fg enthalten. In diesem Fall wird die Gesamtbremskraft Fg über einen Kraftsensor direkt gemessen und an die Steuervorrichtung 10 bereitgestellt.

Die erste Eingabeeinrichtung 26 ist dazu ausgelegt, ein der ersten Information 28 entsprechendes Signal 38 an eine Auswerteeinrichtung 36 der Steuervorrichtung 10 bereitzustellen. Entsprechend ist die zweite Eingabeeinrichtung 30 so an die Auswerteeinrichtung 36 gekoppelt, dass ein der zweiten Information 32 entsprechendes Signal 40 an die Auswerteeinrichtung 36 weiterleitbar ist.

Die erste Eingabeeinrichtung 26 und/oder die zweite Eingabeeinrichtung 30 können auch als Eingänge der Auswerteeinrichtung 36 ausgebildet sein, an welche ein interner Sensor der Steuervorrichtung 10 die Information 28 oder 32 bereitstellt. Weitere Ausbildungsmöglichkeiten für die erste Eingabeeinrichtung 26 und die zweite Eingabeeinrichtung 30 sind für den Fachmann naheliegend. Eine Information 28 und/oder 32 und/oder mindestens eine Information eines Signals 38 und/oder 40 kann eine gefilterte Information sein. In einer bevorzugten Ausführungsform umfassen die erste Eingabeeinrichtung 26 und/oder die zweite Eingabeeinrichtung 30 mindestens einen Filter.

Die Auswerteeinrichtung 36 ist dazu ausgelegt, eine dritte Information bezüglich eines Größenverhältnisses zwischen der Gesamtbremskraft Fg und der Unterstützungskraft Fu festzulegen. Das Festlegen der dritten Information erfolgt unter Berücksichtigung der ersten Information 28 und der zweiten Information 32. Das Größenverhältnis kann dabei auch einen funktionalen Zusammenhang zwischen der Fahrerbremskraft und der Unterstützungskraft Fu angeben.

Bei der dargestellten Ausführungsform ist die Auswerteeinrichtung 36 dazu ausgelegt, als Größenverhältnis eine Differenz zwischen der Gesamtbremskraft Fg und der Unterstützungskraft Fu zu ermitteln. Anschließend wird die Differenz zwischen der Gesamtbremskraft Fg und der Unterstützungskraft Fu als (wahrscheinliche) Fahrerbremskraft Ff festgelegt. Enthält die erste Information 28 die Unterstützungskraft Fu und die zweite Information 32 die Gesamtbremskraft Fg, so kann die (wahrscheinliche) Fahrerbremskraft Ff gemäß der folgenden Gleichung (Gl 3) festgelegt werden:

$$(Gl\ 3) \qquad Ff = Fg - Fu$$

Entsprechend kann, sofern als zweite Information 32 der von dem Drucksensor 34 bestimmte Druck p an die Steuervorrichtung 10 bereitgestellt wird, das Festlegen der (wahrscheinlichen) Fahrerbremskraft Ff gemäß der folgenden Gleichung (Gl 4) geschehen:

$$(Gl\ 4) \qquad Ff = A \times p - Fu,$$

wobei die Fläche A des Kraft-Druck-Umwandlungselements in der Auswerteeinrichtung 36 hinterlegt ist.

Somit ist die Auswerteeinrichtung 36 dazu ausgelegt, anhand der Unterstützungskraft Fu und der Gesamtbremskraft Fg, bzw. anhand der Unterstützungskraft Fu und dem Druck p, die (wahrscheinliche) Fahrerbremskraft Ff zu bestimmen. Mittels der Steuervorrichtung 10 ist somit der Bremswunsch des Fahrers auf einfache Weise ermittelbar. Auf zwei besonders vorteilhafte Anwendungsbeispiele zum Verwenden der von der Auswerteeinrichtung 36 bestimmten (wahrscheinlichen) Fahrerbremskraft Ff wird nachfolgend genauer eingegangen.

Herkömmlicherweise erfolgt das Bestimmen der Fahrerbremskraft Ff durch eine Betätigungselement-Sensorik. Eine geeignete Betätigungselement-Sensorik umfasst einen Kraftsensor zum direkten Messen der Fahrerbremskraft Ff und/oder einen Wegsensor zum Messen eines Verstellwegs einer verstellbaren Komponente des Betätigungselements 12 und/oder einer an das Betätigungselement 12 gekoppelten verstellbaren Komponente. (Der von dem Wegsensor gemessene Verstellweg entspricht der Fahrerbremskraft Ff.)

Das Anordnen der Betätigungselement-Sensorik nahe dem Betätigungselement 12 ist häufig schwer realisierbar. Des Weiteren besteht das Risiko, dass die Betätigungselement-Sensorik ausfällt und somit ein Bestimmen der Fahrerbremskraft Ff durch die Betätigungselement-Sensorik nicht mehr möglich ist.

Durch die Verwendung der Steuervorrichtung 10 kann auf eine herkömmliche Betätigungselement-Sensorik zum Bestimmen der Fahrerbremskraft Ff verzichtet werden. Damit entfallen die Kosten für die Betätigungselement-Sensorik und die Probleme beim Anbringen der Betätigungselement-Sensorik an dem Betätigungselement 12.

In einer bevorzugten Ausführungsform ist das Fahrzeug als Ergänzung zu der Betätigungselement-Sensorik mit der Steuervorrichtung 10 ausgestattet, um einen Funktionsausfall der Betätigungselement-Sensorik über die Steuervorrichtung 10 zu überbrücken. Die Steuervorrichtung 10 ist somit bei einem Ausfall der Betätigungselement-Sensorik als Backup verwendbar.

Bei der dargestellten Ausführungsform ist die Auswerteeinrichtung 36 zusätzlich dazu ausgelegt, unter Berücksichtigung der bestimmten (wahrscheinlichen) Fahrerbremskraft Ff eine Soll-Unterstützungskraft Fu0 festzulegen. (Die Soll-Unterstützungskraft Fu0 entspricht somit einer Differenz aus der Gesamtbremskraft Fg und der Unterstützungskraft Fu.)

Dabei soll die Soll-Unterstützungskraft Fu0 eine Funktion f der Fahrerbremskraft Ff sein:

$$(\text{Gl } 5) \qquad Fu0 = f(Ff)$$

Insbesondere kann gelten:

$$(\text{Gl } 6) \qquad Fu0 = c(Ff) \times Ff,$$

wobei $c(Ff)$ eine Funktion zur Verstärkung der Fahrerbremskraft $Ff$ ist. Die Funktion $c(Ff)$ kann beispielsweise ein konstanter Faktor $\gamma$ (Gl 7) oder eine Abbildung (Gl 8) sein.

$$(\text{Gl } 7) \qquad c(Ff) = \gamma$$

$$(\text{Gl } 8) \qquad c: Ff \rightarrow [0, c_{max}],$$

mit $c_{max}$ als maximalem Verstärkungsfaktor. Als konstanter Faktor $\gamma$ oder Zahlenwerte der Abbildung $c(Ff)$ können vom Hersteller bevorzugte Werte vorgegeben werden. Die Festlegung der Soll-Unterstützungskraft $Fu0$ unter Berücksichtigung der durch die Auswerteeinrichtung 36 festgelegten Fahrerbremskraft $Ff$ ist nicht auf eine bestimmte Funktion $c(Ff)$ eingeschränkt.

Ebenso kann die Soll-Unterstützungskraft $Fu0$ direkt unter Berücksichtigung der Gesamtbremskraft $Fg$ und der Unterstützungskraft $Fu$ festgelegt werden. Beispielsweise gilt:

$$(\text{Gl } 9) \qquad Fu0 = \gamma \times (Fg - Fu),$$

oder

$$(\text{Gl } 10) \qquad Fu0 = \gamma \times (A \times p - Fu),$$

oder

$$(\text{Gl } 11) \qquad Fu0 = c(Fg - Fu) \times (Fg - Fu),$$

oder

$$(\text{Gl } 12) \qquad Fu0 = c(A \times p - Fu) \times (A \times p - Fu).$$

Somit kann ohne die Betätigungselement-Sensorik oder unter Überbrückung der ausgefallenen Betätigungselement-Sensorik eine der Fahrerbremskraft $Ff$ entsprechende Soll-Unterstützungskraft $Fu0$ festgelegt werden. Die von der Auswerteeinrichtung 36 festgelegte Soll-Unterstützungskraft $Fu0$ kann als Wertesignal 42 an eine erste Ausgabeeinrichtung 44 der Steuervorrichtung 10 ausgegeben werden. Die erste Ausgabeeinrichtung 44 ist in diesem Fall dazu ausgelegt, ein erstes Steuersignal 46 mit der festgelegten Soll-Unterstützungskraft $Fu0$ oder einer der Soll-Unterstützungskraft $Fu0$ entsprechenden Größe, wie beispielsweise einem Soll-Motorstrom, einem Soll-Motormoment, einer Soll-Motorposition und/oder einer Soll-Temperatur, an den Bremskraftverstärker 14 ausgegeben.

Der Bremskraftverstärker 14 ist über das Steuersignal 46 so ansteuerbar, dass eine der Soll-Unterstützungskraft $Fu0$ entsprechende Unterstützungskraft $Fu$ über die herkömmlichen Steuerungs- und Regelungsstrategien von dem Bremskraftverstärker 14 bereitstellbar ist. Dabei kann stets eine Aktualisierung der Soll-Unterstützungskraft $Fu0$ unter Verwendung der durch den Bremskraftverstärker 14 gerade ausgeübten Unterstützungskraft $Fu$ durchgeführt werden. Der von der Steuervorrichtung 10 gesteuerte Bremskraftverstärker 14 somit ist für eine regelbare/einstellbare Bremskraftunterstützung geeignet.

Obwohl der Bremswunsch des Fahrers nach einem Ausfall der Betätigungselement-Sensorik mit herkömmlichen Methoden nicht mehr direkt erfassbar ist, ist es möglich, die Funktion des Bremskraftverstärkers 14 durch die Steuervorrichtung 10 aufrecht zu halten. Somit führt der Ausfall der Betätigungselement-Sensorik nicht zu einem Ausfall der Restfunktionalität des Bremssystems. Dies ist ein Vorteil gegenüber dem bei einem Ausfall der Betätigungselement-Sensorik herkömmlicherweise erfolgenden automatischen Abschalten des Bremskraftverstärkers 14, nach welchem der Fahrer die zum Abbremsen benötigte Gesamtbremskraft Fg als Fahrerbremskraft Ff auf das Betätigungselement ausüben muss.

In einer alternativen Ausbildungsform kann anstelle der Soll-Unterstützungskraft Fu0 auch die bestimmte (wahrscheinliche) Fahrerbremskraft Ff von der Steuervorrichtung 10 an den Bremskraftverstärker 14 ausgegeben werden. In diesem Fall ist der Bremskraftverstärker 14 dazu ausgelegt, die Soll-Unterstützungskraft Fu0 abhängig von der bereitgestellten (wahrscheinlichen) Fahrerbremskraft Ff zu bestimmen.

Des Weiteren kann die Auswerteeinrichtung 36 auch dazu ausgelegt sein, die ermittelte (wahrscheinliche) Fahrerbremskraft Ff mit mindestens einem Vergleichswert zu vergleichen. Stellt die Auswerteeinrichtung 36 dabei fest, dass eine Abweichung der (wahrscheinlichen) Fahrerbremskraft Ff von dem mindestens einen Vergleichswert größer als eine vorgegebene Abweichungsgrenze ist, so gibt die Auswerteeinrichtung 36 ein entsprechendes Vergleichsignal 48 an eine zweite Ausgabeeinrichtung 50 der Steuervorrichtung 10 aus. Die Abweichungsgrenze kann auch gleich Null sein. In diesem Fall entfällt ein Vergleich der Abweichung mit der Abweichungsgrenze. Des Weiteren kann die Abweichungsgrenze abhängig von einem Fahrzeugzustand, einem Fahrzeugbetrieb und/oder einem Umgebungszustand vorgegeben werden.

Die zweite Ausgabeeinrichtung 50 ist vorzugsweise dazu ausgelegt, ein zweites Steuersignal 52 an ein Warn- und/oder Informationsausgabegerät 54 auszugeben. Somit ist es möglich, über das Warn- und/oder Informationsausgabegerät 54 eine Warn- oder Fehlermeldung an den Fahrer auszugeben. Der Fahrer hat somit die Möglichkeit, eine Werkstatt zur Überprüfung des Bremssystems aufzusuchen.

Das Warn- und/oder Informationsausgabegerät 54 kann beispielsweise ein Tonausgabegerät, ein Warnlicht und/oder ein Anzeigegerät umfassen. Vorzugsweise ist das für das Fehler-Monitoring verwendete Warn- und/oder Informationsausgabegerät 54 zusätzlich für mindestens eine weitere Funktion verwendbar. Bevorzugterweise ist das Warn- und/oder Informationsausgabegerät 54 ein Anzeigegerät eines Armaturenbretts, ein Autoradio und/oder ein Navigationsgerät.

Des Weiteren kann gleichzeitig mit dem Überbrücken der ausgefallenen Betätigungselement-Sensorik unter Verwendung des Warn- und/oder Informationsausgabegeräts 54 der Fahrer über den Ausfall der Betätigungselement-Sensorik informiert werden.

Als Alternative oder als Ergänzung dazu kann die zweite Ausgabeeinrichtung 50 auch dazu ausgelegt sein, eine Fehlermeldung in einem Fehlerspeicher abzuspeichern. Ebenso kann die zweite Ausgabeeinrichtung 50 dazu ausgelegt sein, ein Sendegerät so anzusteuern, dass eine Fehlermeldung an eine Werkstatt ausgesendet wird. Dies erleichtert das Erkennen der Fehlerursache und ermöglicht somit eine kostengünstigere Behebung des Fehlers.

In einer Weiterbildung kann das Steuergerät 10 nach einem Erkennen mindestens einer zu großen Abweichung der (wahrscheinlichen) Fahrerbremskraft Ff von dem mindestens einen Vergleichswert dazu ausgelegt sein, eine Fehlerursache zu ermitteln. Auf Möglichkeiten zum Ermitteln der Fehlerursache unter Berücksichtigung mindestens eines von der Auswerteeinrichtung 36 ermittelten Werts wird unten noch eingegangen.

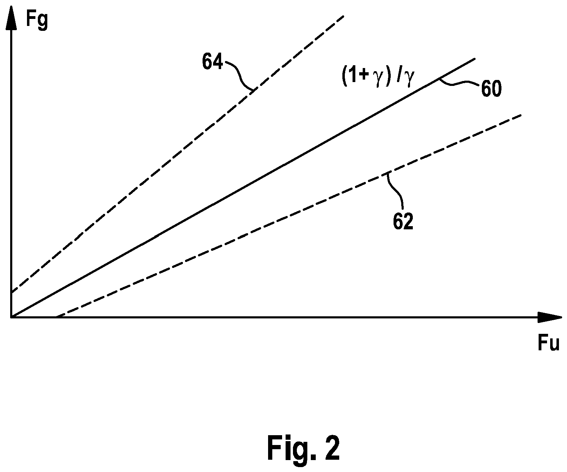

Fig. 2 zeigt ein Koordinatensystem zum Darstellen einer zweiten Ausführungsform der Steuervorrichtung. Die Abszisse des Koordinatensystems gibt einen Wertebereich der Unterstützungskraft Fu, welche an eine erste Eingabeeinrichtung der Steuervorrichtung bereitstellbar ist, an. Die Ordinate entspricht einem Wertebereich für die Gesamtbremskraft Fg, welche an einer zweiten Eingabeeinrichtung der Steuervorrichtung bereitstellbar ist.

Bei dem mit der Steuervorrichtung der Fig. 2 zusammenwirkenden (nicht skizzierten) Bremssystem wird die Soll-Unterstützungskraft Fu0 dem Bremskraftverstärker als eine Funktion der Fahrerbremskraft Ff vorgegeben:

$$(Gl\ 5) \qquad Fu0 = f(Ff) = c(Ff) \times Ff$$

Im Weiteren wird von einer einfach realisierbaren Regelungs- und Steuerungsstrategie ausgegangen, bei welcher gilt:

$$(Gl\ 9) \qquad Fu0 = \gamma \times (Fg - Fu) = \gamma \times Ff,$$

wobei $\gamma$ ein konstanter Faktor ist. Es wird jedoch darauf hingewiesen, dass die vorliegende Erfindung nicht auf ein Überprüfen eines Einhaltens der Soll-Unterstützungskraft Fu0 bei dieser einfach realisierbaren Regelungs- und Steuerungsstrategie beschränkt ist. Stattdessen kann die Steuervorrichtung auch bei einer rechnerisch aufwändigeren Regelungs- und Steuerungsstrategie das Einhalten der Soll-Unterstützungskraft Fu0 durch den Bremskraftverstärker überprüfen. Lediglich zur Vereinfachung der folgenden Beschreibung wird von einer Vorgabe der Soll-Unterstützungskraft Fu0 gemäß Gleichung (Gl 9) beispielhaft ausgegangen.

Wird die Gleichung (Gl 9) in die Gleichung (Gl 1) eingefügt, so erhält man die folgende Soll-Beziehung zwischen der Gesamtbremskraft Fg und der Unterstützungskraft Fu:

$$(Gl\ 13) \qquad Fg = (1+\gamma/\gamma) \times Fu$$

Die Soll-Beziehung der Gleichung (Gl 13) wird eingehalten, sofern die von dem Bremskraftverstärker ausgeübte Unterstützungskraft Fu gleich der vorgegebenen Soll-Unterstützungskraft Fu0 ist. Die Auswerteinrichtung der Steuervorrichtung der Fig. 2 überprüft dies.

Dazu vergleicht die Auswerteinrichtung eine für eine Unterstützungskraft Fu bereitgestellte Gesamtbremskraft Fg mit der in Fig. 2 angegebenen Gerade 60. Die Gerade 60 weist eine Steigung von $(1+\gamma)/\gamma$ auf, welche dem optimalen Quotienten aus der Gesamtbremskraft Fg durch die Unterstützungskraft Fu entspricht. (Als Alternative dazu kann die Auswerteinrichtung auch den Quotienten aus der Gesamtbremskraft Fg durch die Unterstützungskraft Fu berechnen und mit einem Soll-Quotienten gleich $(1+\gamma)/\gamma$ vergleichen.)

Auf diese Weise überprüft die Auswerteinrichtung, ob das Wertepaar aus der Gesamtbremskraft Fg und der Unterstützungskraft Fu innerhalb eines Bereichs zwischen einem minimalen Toleranzband 62 und einem maximalen Toleranzband 64 liegt. Die Toleranzbänder 62 und 64 können fest vorgegeben werden. In einer Weiterbildung kann mindestens eines der Toleranzbänder 62 oder 64 situationsabhängig vorgegeben werden. Beispielsweise wird die Steigung eines Toleranzbandes 62 oder 64 aufgrund von einem Fahrzeugzustand/ einer Funktionsweise des Fahrzeugs, wie einer Fahrzeuggeschwindigkeit, und/oder einer Umgebungssituation, beispielsweise einer Temperatur, festgelegt.

Des Weiteren kann mindestens ein zweites Paar von Toleranzbändern 62 und 64 vorgegeben werden. Beispielsweise definiert das erste Paar von Toleranzbändern 62 und 64 einen ersten Zwischenbereich, in welchem die Wertepaare liegen, welche als unverdächtig einzuschätzen sind. Ein zweites Paar von Toleranzbändern 62 und 64 kann einen größeren zweiten Zwischenbereich definieren, der den Wertepaaren entspricht, welche als nicht-fehlerhaft anzusehen sind.

Wird mindestens ein Wertepaar ermittelt, welches signifikant von der Gerade 60 abweicht und/oder fehlerhaft ist, so ist die Auswerteeinrichtung dazu ausgelegt, eine Funktionsbeeinträchtigung des Bremssystems zu erkennen. Die Auswerteeinrichtung leitet anschließend eine entsprechende Fehlernachricht an die Ausgabeeinrichtung weiter.

Die Ausgabeeinrichtung ist bei einem Empfang der Fehlernachricht dazu ausgelegt, ein Steuersignal an einen Fehlerspeicher, an ein Warn- und/oder Informationsausgabegerät und/oder ein Sendegerät auszugeben. Zusätzlich kann das Bremssystem durch das Steuersignal in eine Rückfallebene versetzt werden. Dies gewährleistet die oben schon beschriebenen Vorteile.

Des Weiteren kann das Steuergerät dazu ausgelegt sein, nach einem Erkennen der Funktionsbeeinträchtigung des Bremssystems eine Fehlerursache zu ermitteln, wie unten noch genauer beschrieben wird.

In einer Weiterbildung ist die Auswerteeinrichtung zusätzlich dazu ausgelegt, nach dem Erkennen der Funktionsbeeinträchtigung des Bremssystems ein zusätzliches Bremsmoment, beispielsweise einen zusätzlichen Bremsdruck, festzulegen. Das zusätzliche Bremsmoment (Zusatz-Bremsmoment) wird vorzugsweise unter Berücksichtigung des Größenverhältnisses zwischen der Gesamtkraft und der Unterstützungskraft so festgelegt, dass die Funktionsbeeinträchtigung des Bremssystems ausgeglichen wird und das von dem Fahrer über die Vorgabe der Fahrerbremskraft angeforderte Gesamtbremsmoment auf mindestens ein Rad des Fahrzeugs ausgeübt wird. In diesem Fall ist die Ausgabeeinrichtung dazu ausgelegt, eine zusätzliche Bremskomponente, wie beispielsweise einen elektrischen Steller, einen elektromechanischen Steller, eine elektrische Parkbremse und/oder ein Bremsregelungssystem so anzusteuern, dass ein Gesamtbremsmoment, beispielsweise ein Gesamtbremsdruck, des bremskraftverstärkten Bremssystems um das zusätzliche Bremsmoment gesteigert wird. Das Bremsregelungssystem ist vorzugsweise ein ESP-System und/oder ein ABS-System.

Wie der Fachmann anhand der vorhergehenden Absätze erkennt, ist die vorliegende Erfindung auch ausführbar, wenn anstelle der Unterstützungskraft Fu und/oder anstelle der Gesamtbremskraft Fg mindestens eine entsprechende erste Information und/oder zweite Information an die Steuervorrichtung bereitgestellt wird.

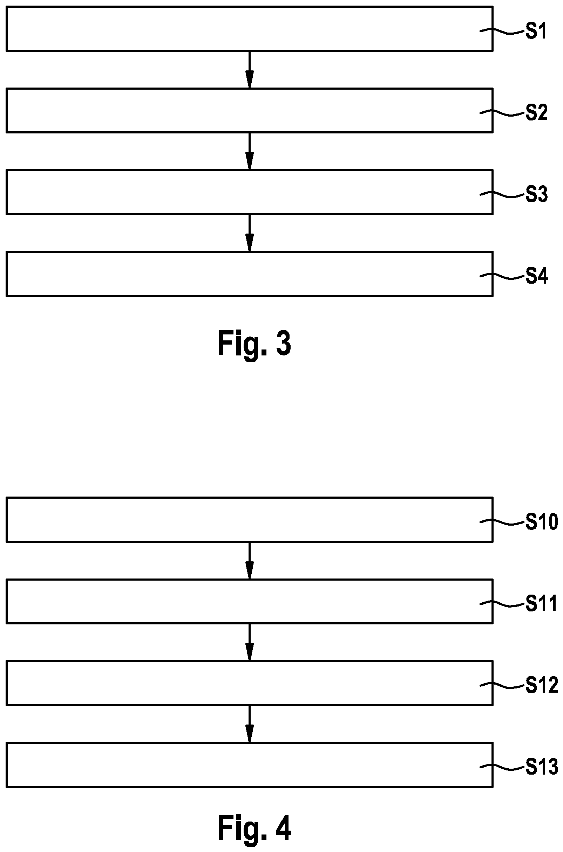

Fig. 3 zeigt ein Flussdiagramm zum Darstellen einer ersten Ausführungsform des Verfahrens.

In einem Verfahrensschritt S1 wird eine erste Information bezüglich einer Unterstützungskraft eines Bremskraftverstärkers des bremskraftverstärkten Bremssystems ermittelt. Die erste Information kann beispielsweise die Unterstützungskraft, einen Motorstrom, ein Motormoment, eine Motorposition, eine Temperatur, einen Druckwert und/oder eine entsprechende Größe, welche eine Funktionsweise des Bremskraftverstärkers wiedergibt, umfassen.

In einem weiteren Verfahrensschritt S2 wird eine zweite Information bezüglich einer Gesamtbremskraft aus der Unterstützungskraft und aus einer Fahrerbremskraft ermittelt. Unter der Fahrerbremskraft ist eine Kraft zu verstehen, welche der Fahrer durch Betätigen eines Betätigungselements des bremskraftverstärkten Bremssystems zum Abbremsen der Räder direkt ausübt. Das Betätigungselement ist beispielsweise ein Bremspedal. Die Fahrerbremskraft entspricht vorzugsweise der Kraft, mit welcher der Fahrer eine verstellbare Komponente des Betätigungselements verstellt, und/oder einem von dem Fahrer auf das Betätigungselement aufgebrachten Druck. Die zweite Information umfasst vorzugsweise die Gesamtbremskraft und/oder den Bremsdruck im Bremskreis.

Es wird darauf hingewiesen, dass die Nummerierung der Verfahrensschritte S1 und S2 keine zeitliche Reihenfolge der Verfahrensschritte festlegt. Beispielsweise kann der Verfahrensschritt S2 auch vor dem Verfahrensschritt S1 ausgeführt werden.

In einem nachfolgenden Verfahrensschritt S3 wird eine dritte Information bezüglich eines Größenverhältnisses zwischen der Gesamtbremskraft und der Unterstützungskraft unter Berücksichtigung der ersten Information und der zweiten Information festgelegt. Die dritte Information bezüglich des Größenverhältnisses ist beispielsweise eine Differenz aus der Gesamtbremskraft und der Unterstützungskraft und/oder ein Quotient aus der Gesamtbremskraft und der Unterstützungskraft.

Insbesondere kann die bestimmte Differenz in dem Verfahrensschritt S3 als (wahrscheinliche) Fahrerbremskraft festgelegt werden. Zusätzlich kann in dem Verfahrensschritt S3 anhand der (wahrscheinlichen) Fahrerbremskraft eine Soll-Unterstützungskraft festgelegt werden. Auf weitere, dem Fachmann naheliegende Ausführungsbeispiele zum Verwenden der festgelegten (wahrscheinlichen) Fahrerbremskraft, welche im Verfahrensschritt S3 durchführbar sind, wird hier nicht eingegangen.

Als Alternative oder als Ergänzung dazu kann das bestimmte Größenverhältnis mit einem Soll-Größenverhältnis, wie beispielsweise einer Soll-Fahrerbremskraft und/oder einem Soll-Quotienten verglichen werden. Weitere Beispiele zum Vergleichen des bestimmten Größenverhältnisses mit einem Soll-Größenverhältnis sind oben genannt.

In einer Weiterbildung kann in Verfahrensschritt S3 zusätzlich eine Fehlerursache unter Berücksichtigung des Vergleichs des bestimmten Größenverhältnisses mit dem Soll-Größenverhältnis bestimmt oder verworfen werden:

Beispielsweise wird festgestellt, dass das Größenverhältnis zwischen den Kräften Fg und Fu bis zu einem Grenzwert korrekt ist und ab dem Grenzwert von dem Soll-Größenverhältnis abweicht, wobei ab dem Grenzwert die Unterstützungskraft/die Motorposition gegenüber der Gesamtbremskraft/dem Bremsdruck zu hoch ist. Ab einer bestimmten Unterstützungskraft Fu erfolgt somit keine oder kaum noch eine Bewegung des Motors des Bremskraftverstärkers. Dies deutet darauf hin, dass der Motor und/oder das Getriebe des Bremskraftverstärkers festgefahren sind. Man spricht dabei auch von einem Klemmen des Motors und/oder des Getriebes.

Wird festgestellt, dass eine Zunahme der Unterstützungskraft/eine Bewegung des Motors des Bremskraftverstärkers keine Steigerung der Gesamtbremskraft/des Drucks in dem Bremskreis bewirkt, so kann ein Leckage in der Hydraulik angenommen werden. In diesem Fall kann ein Test zur Prüfung der Hydraulik durchgeführt werden.

Des Weiteren kann der Motor des Bremskraftverstärkers beschädigt sein. Dies erkennt man daran, dass die Unterstützungskraft/die Motorposition gegenüber der Gesamtbremskraft/dem Bremsdruck zu niedrig ist. Bringt der Motor zuviel Kraft auf, so ist die Unterstützungskraft/die Motorposition gegenüber der Gesamtbremskraft/dem Bremsdruck durchgehend zu hoch.

Abhängig von der Fehlerursache kann das Bremssystem in eine Rückfallebene versetzt werden und/oder eine Schweregradbewertung der Fehlerursache in Verfahrensschritt S3 erfolgen. Auf diese Weise ist eine Gewichtung der Fehlermeldung möglich.

Zusätzlich oder Alternativ kann in Verfahrensschritt S3 ein zusätzliches Bremsmoment, z.B. ein zusätzlicher Bremsdruck, unter Berücksichtigung des Größenverhältnisses zwischen der Gesamtkraft und der Unterstützungskraft festgelegt werden. Vorzugsweise wird das zusätzliche Bremsmoment so festgelegt, dass eine über das ermittelte Größenverhältnis erkennbare Funktionsbeeinträchtigung mindestens einer Komponente des Bremssystems ausgleichbar ist.

In einem nachfolgenden Verfahrensschritt S4 wird mindestens eine Komponente des bremskraftverstärkten Bremssystems unter Berücksichtigung der festgelegten dritten Information gesteuert. Beispielsweise wird ein Bremskraftverstärker so angesteuert, dass er die in dem dritten Verfahrensschritt S3 festgelegte Soll-Unterstützungskraft einhält. Als Alternative oder als Ergänzung dazu kann unter Berücksichtigung des Vergleichs eines Ist-Größenverhältnisses mit einem Soll-Größenverhältnisses auch ein Warn- und/oder Informationsausgabegerät für eine Tonausgabe und/oder eine Bildanzeige an den Fahrer aktiviert werden. Des Weiteren kann eine Fehlermeldung, eine Fehlerursache und/oder eine Fehlergewichtung auf einem Fehlerspeicher abgespeichert und/oder über ein Sendegerät ausgesendet werden.

Umfasst die dritte Information das zusätzlichen Bremsmoment, so wird in dem Verfahrensschritt S4 mindestens eine Bremskomponente des bremskraftverstärkten Bremssystems so angesteuert, dass ein Gesamtbremsmoment des bremskraftverstärkten Bremssystems um das zusätzliche Bremsmoment erhöht wird. Dabei werden vorzugsweise ein elektrischer Steller, ein elektromechanischer Steller, eine elektrische Parkbremse und/oder ein Bremsregelungssystem, wie beispielsweise ein ESP-System und/oder ein ABS-System, angesteuert. Als Alternative oder als Ergänzung zu den hier aufgezählten Bremskomponenten kann auch eine andere Bremskomponente, welche für eine Volumenänderung/Volumenverschiebung im Bremskreis des bremskraftverstärkten Bremssystems ausgelegt ist, zum Erhöhen des Gesamtbremsmoments um das zusätzliche Bremsmoment angesteuert werden.

Fig. 4 zeigt ein Flussdiagramm zum Darstellen einer zweiten Ausführungsform des Verfahrens.

In einem ersten Verfahrensschritt S10 wird eine Größe bezüglich einer von einem Bremskraftverstärker eines bremskraftverstärkten Bremssystems aufgebrachten Unterstützungskraft ermittelt. Die Größe kann beispielsweise die Unterstützungskraft und/oder einen Motorstrom, ein Motormoment, eine Motorposition, eine Temperatur und/oder einen Druckwert des Bremskraftverstärkers umfassen. (Der Verfahrensschritt S10 kann dem Verfahrensschritt S1 entsprechen.)

Anschließend wird die ermittelte Größe bezüglich der Unterstützungskraft mit mindestens einer Soll-Größe bezüglich der Unterstützungskraft verglichen (Verfahrensschritt S11). Die Soll-Größe ist vorzugsweise eine Soll-Unterstützungskraft, ein Soll-Motorstrom, ein Soll-Motormoment, eine Soll-Motorposition, eine Soll-Temperatur und/oder ein Soll-Druckwert.

Wird bei dem Vergleich der ermittelten Größe mit der Soll-Größe festgestellt, dass eine Differenz zwischen der Größe und der Soll-Größe größer als eine vorgegebene Abweichungsgrenze ist, so wird in einem nachfolgenden Verfahrensschritt S12 ein der Differenz entsprechendes zusätzliches Bremsmoment, z.B. ein zusätzlicher Bremsdruck, festgelegt. Das zusätzliche Bremsmoment wird vorzugsweise so festgelegt, dass nach dem Aufbringen des zusätzlichen Bremsmoments ein bevorzugtes/vorteilhaftes Gesamtbremsmoment auf mindestens eines der Räder des Fahrzeugs wirkt.

Insbesondere kann in dem Verfahrensschritt S12 zuerst eine Differenz $\Delta F$ zwischen der Unterstützungskraft Fu und der Soll-Unterstützungskraft Fu0 bestimmt werden:

$$(GI\ 14) \qquad \Delta F = Fu0 - Fu$$

Anschließend kann ein zusätzlicher Bremsdruck $\Delta p$ als zusätzliches Bremsmoment aus der Differenz $\Delta F$ und einer Fläche A eines Kraft-Druck-Umwandlungselements gemäß der Gleichung (GI 15) bestimmt werden:

$$(GI\ 15) \qquad \Delta p = \Delta F/A$$

In einem weiteren Verfahrensschritt S13 wird ein Gesamtbremsmoment des bremskraftverstärkten Bremssystems um das zusätzliche Bremsmoment (den zusätzlichen Bremsdruck $\Delta p$) erhöht. Dies erfolgt vorzugsweise durch Ansteuern einer Bremskomponente, welche für eine Volumenänderung, Volumenverschiebung und/oder eine Bremsmomentänderung im Bremskreis des bremskraftverstärkten Bremssystems ausgelegt ist. Beispielsweise wird ein elektrischer Steller, ein elektromechanischer Steller, eine elektrische Parkbremse oder ein Bremsregelungssystem, vorzugsweise ein ESP-System und/oder ein ABS-System, so angesteuert, dass das zusätzliche Bremsmoment eingestellt wird. Durch das Erhöhen des Gesamtbremsdrucks um das zusätzliche Bremsmoment wird die Restfunktionalität des Bremssystems gesteigert.

Verwendet man beispielsweise ein ESP-System, so kann mindestens ein Kreisdruck um den zusätzlichen Bremsdruck $\Delta p$ erhöht werden, indem man die Rückförderpumpe und das Umschaltventil entsprechend einsetzt. Da die Anordnung und die Funktionsweise einer Rückförderpumpe und eines Umschaltventils eines Rückfördersystems dem Fachmann bekannt sind, wird hier nicht weiter darauf eingegangen.

Über das hier beschriebene Verfahren wird ein bevorzugtes Gesamtbremsmoment trotz einer Funktionsbeeinträchtigung des Bremskraftverstärkers und ohne ein Mehraufbringen der Fahrerbremskraft durch den Fahrer erreicht. Somit ist eine sichere Bremsweise des Bremssystems gewährleistet.

Insbesondere kann in einem optionalen Verfahrensschritt nach einem Erkennen, dass die Differenz zwischen der Größe und der Soll-Größe größer als die vorgegebene Abweichungsgrenze ist, eine Fehlermeldung an den Fahrer über ein Warn- und/oder Informationsausgabegerät ausgegeben werden. Somit kann der Fahrer eine Werkstatt aufsuchen und das Bremssystem untersuchen lassen.

Als Alternative oder als Ergänzung zu dem oben beschriebenen optionalen Verfahrensschritt kann auch nach dem Erkennen, dass die Differenz zwischen der Größe und der Soll-Größe größer als die vorgegebene Abweichungsgrenze ist, eine Untersuchung der Fehlerursache ausgeführt werden. Da Möglichkeiten zum Ermitteln der Fehlerursache oben schon aufgeführt sind, wird hier nicht darauf eingegangen.

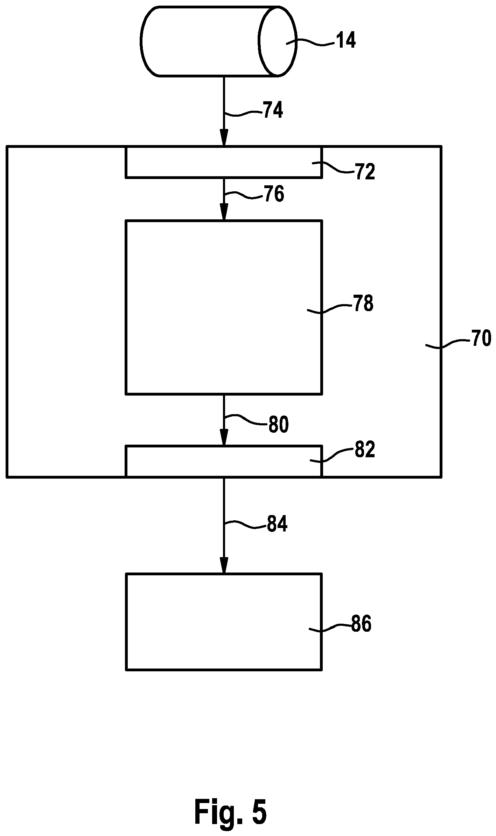

Fig. 5 zeigt eine schematische Darstellung einer dritten Ausführungsform der Steuervorrichtung.

Die dargestellte Steuervorrichtung 70 für ein bremskraftverstärktes Bremssystem eines Fahrzeugs umfasst eine Eingabeeinrichtung 72 zum Empfangen eines Eingangssignals 74 mit einer bereitgestellten Größe bezüglich einer Unterstützungskraft eines Bremskraftverstärkers 14 des (nur teilweise skizzierten) bremskraftverstärkten Bremssystems. Die bereitgestellte Größe umfasst beispielsweise die Unterstützungskraft, einen Motorstrom, ein Motormoment, eine Motorposition, eine Temperatur, einen Druckwert und/oder eine entsprechende Größe, welche eine Funktionsweise des Bremskraftverstärkers 14 wiedergibt.

Die Eingabeeinrichtung 72 gibt ein der bereitgestellten Größe entsprechendes Signal 76 an eine Auswerteeinrichtung 78 der Steuervorrichtung 70 aus. Die Auswerteeinrichtung 78 ist dazu ausgelegt, die empfangene Größe (bzw. das Signal 76) bezüglich der Unterstützungskraft mit einer vorgegebenen Soll-Größe bezüglich der Unterstützungskraft zu vergleichen. Die Soll-Größe kann auf der Auswerteeinrichtung 78 abgespeichert sein. Ebenso kann die Soll-Größe unter Berücksichtigung eines Fahrzeugzustands/ einer Funktionsweise des Fahrzeugs und/oder einer Umgebungssituation bereitgestellt werden. Erkennt die Auswerteeinrichtung 78, dass eine Differenz zwischen der Größe und der Soll-Größe größer als eine vorgegebene Abweichungsgrenze ist, so ist die Auswerteeinrichtung 78 zusätzlich dazu ausgelegt, ein der Differenz entsprechendes zusätzliches Bremsmoment festzulegen. Beispielsweise geschieht dies über die oben angegebenen Gleichungen (Gl 14) und (Gl 15). Das zusätzliche Bremsmoment wird anschließend als Bremsmomentsignal 80 an eine Ausgabeeinrichtung 82 bereitgestellt.

Die Ausgabeeinrichtung 82 ist dazu ausgelegt, unter Berücksichtigung des festgelegten zusätzlichen Bremsmoments über mindestens ein Steuersignal 84 mindestens eine Bremskomponente 86 so anzusteuern, dass ein Gesamtbremsmoment des bremskraftverstärkten Bremssystems um das zusätzliche Bremsmoment erhöht wird. Die Bremskomponente 86 ist für eine Volumenänderung/Volumenverschiebung und/oder eine Bremsmomentänderung im Bremskreis des bremskraftverstärkten Bremssystems ausgelegt. Vorzugsweise werden ein elektrischer Steller, ein elektromechanischer Steller, eine elektrische Parkbremse und/oder ein Bremsregelungssystem als Bremskomponente 86 angesteuert. Die Bremskomponente 86 kann beispielsweise ein ESP-System und/oder ein ABS-System umfassen.

Auf diese Weise sind die oben schon beschriebenen Vorteile gewährleistet. Die Steuervorrichtung 70 kann zusätzlich dazu ausgelegt sein, nach einem Erkennen einer Differenz größer als die vorgegebene Abweichungsgrenze eine Fehleruntersuchung, eine Fehlergewichtung und/oder eine Benachrichtigung des Fahrers über das Auftreten einer Funktionsbeeinträchtigung an dem Bremssystem auszuführen. Da entsprechende Weiterbildungen der Steuervorrichtung 70 für den Fachmann durch die vorhergehenden Beschreibungen nahegelegt sind, wird hier nicht darauf eingegangen.

**Patentansprüche**

1. Steuervorrichtung (10) für ein bremskraftverstärktes Bremssystem eines Fahrzeugs mit:

    einer ersten Eingabeeinrichtung (26), welcher dazu ausgelegt ist, eine bereitgestellte erste Information (28) bezüglich einer bereitgestellten Unterstützungskraft (Fu) eines Bremskraftverstärkers (14) des bremskraftverstärkten Bremssystems zu empfangen;

    einer zweiten Eingabeeinrichtung (30), welcher dazu ausgelegt ist, eine bereitgestellte zweite Information (32) bezüglich einer Gesamtkraft (Fg) aus der Unterstützungskraft (Fu) und aus einer durch eine Betätigung eines Betätigungselements (12) des bremskraftverstärkten Bremssystems bereitgestellten Fahrerbremskraft (Ff) zu empfangen;

    einer Auswerteeinrichtung (36), welche dazu ausgelegt ist, eine dritte Information bezüglich eines Größenverhältnisses zwischen der Gesamtkraft (Fg) und der Unterstützungskraft (Fu) unter Berücksichtigung der ersten Information (28) und der zweiten Information (32) festzulegen, und

    einer Ausgabeeinrichtung (44,50), welche dazu ausgelegt ist, mindestens ein Steuersignal (46,52) an mindestens eine Komponente (14,54) des bremskraftverstärkten Bremssystems unter Berücksichtigung der festgelegten dritten Information bezüglich des Größenverhältnisses zwischen der Gesamtkraft (Fg) und der Unterstützungskraft (Fu) bereitzustellen;

    **dadurch gekennzeichnet, dass**

    die zweite Information (32) mindestens einen Druck (p) im inneren eines Hauptbremszylinders (24) des Bremssystems, einen von einem Vordrucksensor messbaren Vordruck (p), einen von einem Raddrucksensor messbaren Raddruck (p) und/oder einen von einem Kreisdrucksensor messbaren Kreisdruck (p) umfasst, und die Auswerteeinrichtung (36) dazu ausgelegt ist, eine wahrscheinliche Fahrerbremskraft (Ff) unter Berücksichtigung der ersten Information (28) und des Drucks (p) als zumindest Teil der dritten Information bezüglich einer Differenz zwischen der Gesamtkraft (Fg) und der Unterstützungskraft (Fu) festzulegen.

2.  Steuervorrichtung (10) nach Anspruch 1, wobei die Auswerteeinrichtung (36) zusätzliche dazu ausgelegt ist, als zumindest Teil der dritten Information einen Quotienten aus der Gesamtkraft (Fg) und der Unterstützungskraft (Fu) unter Berücksichtigung der ersten Information (28) und des Drucks (p), Vordrucks (p), Raddrucks (p) und/oder Kreisdrucks (p) festzulegen.

3.  Steuervorrichtung (10) nach Anspruch 1 oder 2, wobei die Auswerteeinrichtung (36) dazu ausgelegt ist, eine Soll-Unterstützungskraft (Fu0) unter Berücksichtigung der wahrscheinlichen Fahrerbremskraft (Ff) als zumindest Teil der dritten Information festzulegen.

4.  Steuervorrichtung (10) nach einem der vorhergehenden Ansprüche, wobei die Auswerteeinrichtung (36) dazu ausgelegt ist, die wahrscheinliche Fahrerbremskraft (Ff) und/oder den Quotienten als das Größenverhältnis zwischen der Gesamtkraft (Fg) und der Unterstützungskraft (Fu) mit mindestens einem Soll-Größenverhältnis (60) zu vergleichen und eine entsprechende Vergleichsinformation als zumindest Teil der dritten Information festzulegen.

5.  Steuervorrichtung (10) nach einem der Ansprüche 2 bis 4, wobei die Auswerteeinrichtung (36) dazu ausgelegt ist, ein zusätzliches Bremsmoment (Δp) unter Berücksichtigung des Quotienten zwischen der Gesamtkraft (Fg) und der Unterstützungskraft (Fu) als zumindest Teil der dritten Information festzulegen, und wobei die Ausgabeeinrichtung (44,50) dazu ausgelegt ist, über das mindestens eine Steuersignal (46,52) mindestens eine Bremskomponente als mindestens eine Komponente (14,54) des bremskraftverstärkten Bremssystems so anzusteuern, dass ein Gesamtbremsmoment des bremskraftverstärkten Bremssystems um das zusätzliche Bremsmoment (Δp) steigerbar ist.

6.  Steuervorrichtung (10) nach einem der vorhergehenden Ansprüche, wobei die Ausgabeeinrichtung (44,50) dazu ausgelegt ist, das mindestens eine Steuersignal (46,52) an einen Bremskraftverstärker (14), an ein Warn und/oder Informationsausgabegerät (54), an einen Fehlerspeicher, an eine Sendeeinheit, an eine elektrische Parkbremse und/oder ein Bremsregelungssystem als die mindestens eine Komponente (14,54) des bremskraftverstärkten Bremssystems bereitzustellen.

7.  Steuervorrichtung (10) nach einem der vorhergehenden Ansprüche, wobei die erste Information (28) einen Motorstrom, ein Motormoment und/oder eine Motorposition eines Motors des elektromechanischen oder elektrischen Bremskraftverstärkers (14), eine Temperator im Inneren des Bremskraftverstärkers (14) und/oder einen Druckwert des hydraulischen Bremskraftverstärkers (14) umfasst.

8.  Bremskraftverstärktes Bremssystem mit einer Steuervorrichtung (10) nach einem der vorhergehenden Ansprüche.

9.  Fahrzeug mit einem bremskraftverstärkten Bremssystem nach Anspruch 8.

10. Verfahren zum Betreiben eines bremskraftverstärkten Bremssystems eines Fahrzeugs mit den Schritten:

    Ermitteln einer ersten Information (28) bezüglich einer bereitgestellten Unterstützungskraft (Fu) eines Bremskraftverstärkers (14) des bremskraftverstärkten Bremssystems;
    Ermitteln einer zweiten Information (32) bezüglich einer Gesamtkraft (Fg) aus der Unterstützungskraft (Fu) und aus einer durch ein Betätigen eines Betätigungselements (10) des bremskraftverstärkten Bremssystems bereitgestellten Fahrerbremskraft (Ff);
    Festlegen einer dritten Information bezüglich eines Größenverhältnisses zwischen der Gesamtkraft (Fg) und der Unterstützungskraft (Fu) unter Berücksichtigung der ersten Information (28) und der zweiten Information (32); und
    Steuern mindestens einer Komponente (14,54) des bremskraftverstärkten Bremssystems unter Berücksichtigung der festgelegten dritten Information bezüglich des Größenverhältnisses zwischen der Gesamtkraft (Fg) und der Unterstützungskraft (Fu)
    **dadurch gekennzeichnet, dass**
    als zweite Information (32) mindestens ein Druck (p) im Inneren eines Hauptbremszylinders (24) des Bremssystems, ein von einem Vordrucksensor gemessener Vordruck (p), ein von einem Raddrucksensor gemessener Raddruck (p) und/oder ein von einem Kreisdrucksensor gemessener Kreisdruck (p) gemessen werden, und eine wahrscheinliche Fahrerbremskraft (Ff) unter Berücksichtigung der ersten Information (28) und des Drucks (p) als zumindest Teil der dritten Information bezüglich einer Differenz zwischen der Gesamtkraft (Fg) und der Unterstützungskraft (Fu) festgelegt wird

**EP 2 416 995 B1**

**Claims**

1. Control device (10) for a booster brake system of a vehicle, comprising:

a first input device (26) which is configured to receive a supplied first information item (28) relating to a supplied assistance force (Fu) of a brake booster (14) of the booster brake system:

a second input device (30) which is configured to receive a supplied second information item (32) relating to a total force (Fg) composed of the assistance force (Fu) and a driver braking force (Ff) supplied by actuation of an activation element (12) of the booster brake system;
an evaluation device (36) which is configured to define a third information item relating to a proportional relationship between the total force (Fg) and the assistance force (Fu) taking into account the first information item (28) and the second information item (32); and
an output device (44, 50) which is configured to supply at least one control signal (46, 52) to at least one component (14, 54) of the booster brake system taking into account the defined third information item relating to the proportional relationship between the total force (Fg) and the assistance force (Fu);
**characterized in that**
the second information item (32) comprises at least a pressure (p) in the interior of a master brake cylinder (24) of the brake system, an admission pressure (p) measureable by an admission pressure sensor, a wheel pressure (p) measureable by a wheel pressure sensor and/or a circuit pressure (p) measureable by a circuit pressure sensor, and the evaluation device (36) is configured to define a probable driver braking force (Ff) taking into account the first information item (28) and the pressure (p) as at least part of the third information item relating to a difference between the total force (Fg) and the assistance force (Fu).

2. Control device (10) according to Claim 1, wherein the evaluation device (36) is additionally configured to define, as at least part of the third information item, a quotient of the total force (Fg) and of the assistance force (Fu) taking into account the first information item (28) and the pressure (p), admission pressure (p), wheel pressure (p) and/or circuit pressure (p).

3. Control device (10) according to Claim 1 or 2, wherein the evaluation device (36) is configured to define a setpoint assistance force (Fu0) taking into account the probable driver braking force (Ff) as at least part of the third information item.

4. Control device (10) according to one of the preceding claims, wherein the evaluation device (36) is configured to compare the probable driver braking force (Ff) and/or the quotient as the proportional relationship between the total force (Fg) and the assistance force (Fu) with at least one setpoint proportional relationship (60) and to define a corresponding comparison information item as at least part of the third information item.

5. Control device (10) according to one of Claims 2 to 4, wherein the evaluation device (36) is configured to define an additional braking torque ($\Delta p$) taking into account the quotient between the total force (Fg) and the assistance force (Fu) as at least part of the third information item, and wherein the output device (44, 50) is configured to actuate, by means of the at least one control signal (46, 52), at least one brake component as at least one component (14, 54) of the booster brake system in such a way that a total braking torque of the booster brake system can be increased by an amount equal to the additional braking torque ($\Delta p$).

6. Control device (10) according to one of the preceding claims, wherein the output device (44, 50) is configured to supply the at least one control signal (46, 52) to a brake booster (14), to a device (54) for outputting warnings and/or information, to a fault memory, to a transmitting unit, to an electric parking brake and/or a brake control system as the at least one component (14, 54) of the booster brake system.

7. Control device (10) according to one of the preceding claims, wherein the first information item (28) comprises a motor current, a motor torque and/or a motor position of a motor of the electromechanical or electric brake booster (14), a temperature in the interior of the brake booster (14) and/or a pressure value of the hydraulic brake booster (14).

8. Booster brake system having a control device (10) according to one of the preceding claims.

9. Vehicle having a booster brake system according to Claim 8.

**10.** Method for operating a booster brake system of a vehicle, comprising the steps:

determination of a first information item (28) relating to a supplied assistance force (Fu) of a brake booster (14) of the booster brake system;

determination of a second information item (32) relating to a total force (Fg) composed of the assistance force (Fu) and of a driver braking force (Ff) supplied by activating an activation element (10) of the booster brake system;

definition of a third information item relating to a proportional relationship between the total force (Fg) and the assistance force (Fu) taking into account the first information item (28) and the second information item (32); and

controlling at least one component (14, 54) of the booster brake system taking into account the supplied third information item relating to the proportional relationship between the total force (Fg) and the assistance force (Fu), **characterized in that**

at least a pressure (p) in the interior of a master brake cylinder (24) of the brake system, an admission pressure (p) measured by an admission pressure sensor, a wheel pressure (p) measured by a wheel pressure sensor and/or a circuit pressure (p) measured by a circuit pressure sensor are measured as second information item (32), and a probable driver braking force (Ff) is defined taking into account the first information item (28) and the pressure (p) as at least part of the third information item relating to a difference between the total force (Fg) and the assistance force (Fu).

**Revendications**

**1.** Dispositif de réglage (10) pour un système de freinage assisté d'un véhicule, avec:

un premier dispositif d'entrée (26), qui est conçu pour recevoir une première information fournie (28) concernant une force d'assistance fournie (Fu) d'un servofrein (14) du système de freinage assisté;

un deuxième dispositif d'entrée (30), qui est conçu pour recevoir une deuxième information fournie (32) concernant une force totale (Fg) composée de la force d'assistance (Fu) et d'une force de freinage du conducteur (Ff) fournie par l'actionnement d'un élément d'actionnement (12) du système de freinage assisté;

un dispositif d'évaluation (36), qui est conçu pour déterminer une troisième information concernant un rapport de grandeur entre la force totale (Fg) et la force d'assistance (Fu) en tenant compte de la première information (28) et de la deuxième information (32); et

un dispositif de sortie (44, 50), qui est conçu pour fournir au moins un signal de réglage (46, 52) à au moins un composant (14, 54) du système de freinage assisté en tenant compte de la troisième information déterminée concernant le rapport de grandeur entre la force totale (Fg) et la force d'assistance (Fu); **caractérisé en ce que** la deuxième information (32) comprend au moins une pression (p) à l'intérieur d'un maître-cylindre de frein (24) du système de freinage, une pression d'admission (p) mesurable par un capteur de pression d'admission, une pression de roue (p) mesurable par un capteur de pression de roue, et/ou une pression de circuit (p) mesurable par un capteur de pression de circuit, et le dispositif d'évaluation (36) est conçu pour déterminer une force de freinage du conducteur probable (Ff) en tenant compte de la première information (28) et de la pression (p) comme au moins une partie de la troisième information concernant une différence entre la force totale (Fg) et la force d'assistance (Fu).

**2.** Dispositif de réglage (10) selon la revendication 1, dans lequel le dispositif d'évaluation (36) est en outre conçu pour déterminer, comme au moins une partie de la troisième information, un quotient entre la force totale (Fg) et la force d'assistance (Fu) en tenant compte de la première information (28) et de la pression (p), de la pression d'admission (p), de la pression de roue (p) et/ou de la pression de circuit (p).

**3.** Dispositif de réglage (10) selon la revendication 1 ou 2, dans lequel le dispositif d'évaluation (36) est conçu pour déterminer une force d'assistance de consigne (Fu0) en tenant compte de la force de freinage du conducteur probable (Ff) comme au moins une partie de la troisième information.

**4.** Dispositif de réglage (10) selon l'une quelconque des revendications précédentes, dans lequel le dispositif d'évaluation (36) est conçu pour comparer la force de freinage du conducteur probable (Ff) et/ou le quotient fourni par le rapport de grandeur entre la force totale (Fg) et la force d'assistance (Fu) avec au moins un rapport de grandeur de consigne (60) et pour déterminer une information comparative correspondante comme au moins une partie de la troisième information.

**5.** Dispositif de réglage (10) selon l'une quelconque des revendications 2 à 4, dans lequel le dispositif d'évaluation (36) est conçu pour déterminer un couple de freinage additionnel ($\Delta$p) en tenant compte du quotient entre la force totale (Fg) et la force d'assistance (Fu) comme au moins une partie de la troisième information, et dans lequel le dispositif de sortie (44, 50) est conçu pour commander, au moyen dudit au moins un signal de réglage (46, 52), au moins un composant de frein comme au moins un composant (14, 54) du système de freinage assisté, de telle manière qu'un couple de freinage total du système de freinage assisté puisse être augmenté du couple de freinage additionnel ($\Delta$p).

**6.** Dispositif de réglage (10) selon l'une quelconque des revendications précédentes, dans lequel le dispositif de sortie (44, 50) est conçu pour fournir ledit au moins un signal de réglage (46, 52) à un servofrein (14), à un avertisseur et/ou un appareil d'envoi d'informations (54), à une mémoire de défauts, à une unité d'émission, à un frein de stationnement électrique et/ou à un système de régulation de freinage comme ledit au moins un composant (14, 54) du système de frein assisté.

**7.** Dispositif de réglage (10) selon l'une quelconque des revendications précédentes, dans lequel la première information (28) comprend un courant de moteur, un couple de moteur et/ou une position de moteur d'un moteur du servofrein électromécanique ou électrique (14), une température à l'intérieur du servofrein (14) et/ou une valeur de pression du servofrein hydraulique (14).

**8.** Système de freinage assisté comportant un dispositif de réglage (10) selon l'une quelconque des revendications précédentes.

**9.** Véhicule comportant un système de freinage assisté selon la revendication 8.

**10.** Procédé de réglage d'un système de freinage assisté d'un véhicule, comprenant les étapes suivantes:

déterminer une première information (28) concernant une force d'assistance fournie (Fu) d'un servofrein (14) du système de freinage assisté;
déterminer une deuxième information (32) concernant une force totale (Fg) composée de la force d'assistance (Fu) et d'une force de freinage du conducteur (Ff) fournie par un actionnement d'un élément d'actionnement (10) du système de freinage assisté;
déterminer une troisième information concernant un rapport de grandeur entre la force totale (Fg) et la force d'assistance (Fu) en tenant compte de la première information (28) et de la deuxième information (32); et
régler au moins un composant (14, 54) du système de freinage assisté en tenant compte de la troisième information déterminée concernant le rapport de grandeur entre la force totale (Fg) et la force d'assistance (Fu),

**caractérisé en ce que**

on mesure comme deuxième information (32) au moins une pression (p) à l'intérieur d'un maître-cylindre de frein (24) du système de freinage, une pression d'admission (p) mesurée par un capteur de pression d'admission, une pression de roue (p) mesurée par un capteur de pression de roue et/ou une pression de circuit (p) mesurée par un capteur de pression de circuit, et on détermine une force de freinage du conducteur probable (Ff) en tenant compte de la première information (28) et de la pression (p) comme au moins une partie de la troisième information concernant une différence entre la force totale (Fg) et la force d'assistance (Fu).

Fig. 1

EP 2 416 995 B1

**Fig. 2**

```
┌────────────────────────────────────────┐
│                                        │──── S1
└────────────────────────────────────────┘
                     │
                     ▼
┌────────────────────────────────────────┐
│                                        │──── S2
└────────────────────────────────────────┘
                     │
                     ▼
┌────────────────────────────────────────┐
│                                        │──── S3
└────────────────────────────────────────┘
                     │
                     ▼
┌────────────────────────────────────────┐
│                                        │──── S4
└────────────────────────────────────────┘
```

## Fig. 3

```
┌────────────────────────────────────────┐
│                                        │──── S10
└────────────────────────────────────────┘
                     │
                     ▼
┌────────────────────────────────────────┐
│                                        │──── S11
└────────────────────────────────────────┘
                     │
                     ▼
┌────────────────────────────────────────┐
│                                        │──── S12
└────────────────────────────────────────┘
                     │
                     ▼
┌────────────────────────────────────────┐
│                                        │──── S13
└────────────────────────────────────────┘
```

## Fig. 4

**Fig. 5**

**EP 2 416 995 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005024577 A1
- DE 10057557 A1
- DE 10327553 A1